# EUROPEAN PATENT SPECIFICATION

(11) **EP 2 749 177 B1**
(45) Date of publication and mention of the grant of the patent: **29.03.2017**
(21) Application number: 12839067.1
(22) Date of filing: 05.10.2012
(51) Int. Cl.: A23D 9/00, A23D 9/013

(54) **OIL/FAT COMPOSITION**
ÖL-/FETT-ZUSAMMENSETZUNG
COMPOSITION D'HUILE/GRAISSE

(30) Priority: 07.10.2011 JP 2011223209; 14.12.2011 JP 2011273466
(43) Date of publication of application: 02.07.2014
(73) Proprietor: Kao Corporation, Chuo-ku Tokyo 103-8210 (JP)
(72) Inventor: HOMMA, Rika, Tokyo 131-8501 (JP); MATSUDA, Yuumi, Tokyo 131-8501 (JP)
(74) Representative: Hoffmann Eitle
(86) International application number: PCT/JP2012/076001
(87) International publication number: WO 2013/051706

(56) References cited:
- EP-A1- 2 656 737
- WO-A1-2011/092299
- JP-A- S61 118 318
- JP-A- 2001 226 693
- JP-A- 2006 257 064

## Description

### Field of the Invention

The present invention relates to a fat or oil composition useful in cooking.

### Background of the Invention

In recent years, the maintenance and enhancement of health and the prevention and treatment of diseases have drawn increasing interest, and hence many studies have been made on the physiological functions of fish oil and of eicosapentaenoic acid (C20:5, EPA) and docosahexaenoic acid (C22:6, DHA), which are constituent components of the fish oil. Specifically, an anti-arteriosclerotic action, a cerebral function improving action, a visual function improving action, an antitumor action, an anti-inflammatory action, have been reported (Non Patent Document 1).

However, fats or oils rich in highly-unsaturated fatty acids of this kind are easily degraded due to their low thermal stability and oxidative stability, and hence the practical use thereof is remarkably restricted from the viewpoint of taste and flavor.

JP-S61-118318 describes a composition for reducing free cholesterol and LDL cholesterol, which includes a specific triterpene alcohol and a highly unsaturated oil.

JP 2001-226693 is directed to an oil/fat composition which has a blood lipid-controlling function, has cooking aptitude equivalent to that of a conventional edible oil, and further has good flavor and good safety. The composition consists mainly of triglycerides, characterized by containing n-3 series long chain polybasic unsaturated fatty acids and middle chain fatty acids in specific amounts as fatty acids.

### Citation List

### Non Patent Document

[Non Patent Document 1] Journal of Japan Oil Chemists' Society, 48, 1017 (1999)

### Summary of the Invention

The present invention provides a fat or oil composition, comprising the following components (A) and (B) :
(A) 95 to 99.95 mass% of a fat or oil in which the total content of eicosapentaenoic acid and docosahexaenoic acid in constituent fatty acids thereof is from 0.4 to 7 mass% with respect to the total constituent fatty acids of the fat or oil; and
(B) 0.05 to 1.8 mass% of a free type triterpene alcohol.

### Detailed Description of the Invention

In particular, when a fat or oil rich in eicosapentaenoic acid and docosahexaenoic acid is used for cooking, unconfortable degradation odor may be caused and the cooked food may provide oily heavy taste and flavor.

Thus, the present invention relates to providing a fat or oil composition that may reduce degradation odor to a less extent at the time of cooking even though containing large amounts of eicosapentaenoic acid and docosahexaenoic acid, and is capable of improving the taste and flavor of the cooked food.

The inventors of the present invention made intensive studies to solve the above-mentioned problems. As a result, the inventors found that, when a fat or oil composition contains a free type triterpene alcohol in a predetermined amount, the degradation odor thereof is improved and a cooked food having good taste and flavor can be provided. In addition, the inventors found that, when the fat or oil composition is used for cooking a deep-fried food, the original good taste and flavor of a material to be fried is felt and oily feeling disappears, and hence the fat or oil composition having good capabilities to be used as a fat or oil for cooking can be obtained.

According to the present invention, it is possible to obtain a fat or oil composition that may reduce the degradation odor to a less extent at the time of cooking, and is capable of providing a delicious cooked food excellent in taste and flavor, even though containing large amounts of eicosapentaenoic acid and docosahexaenoic acid excellent in physiological functions.

The content of the fat or oil as the component (A) according to the present invention in the fat or oil composition is preferably from 97 to 99%, from the standpoint of the use thereof.

In the constituent fatty acids of the fat or oil (A) to be used in the present invention, the total content of eicosapentaenoic acid and docosahexaenoic acid with respect to the total constituent fatty acids of the fat or oil is from 0.4 to 7%, and is preferably 0.5% or more, more preferably 1% or more, more preferably 2% or more, even more preferably 4% or more, from the standpoint of physiological effects. Further, the total content of eicosapentaenoic acid and docosahexaenoic acid is 7% or less, preferably 6% or less, more preferably 5% or less, even more preferably 4% or less, and is from 0.4 to 7%, preferably from 0.4 to 6%, more preferably from 0.5 to 5%, even more preferably from 1 to 4%, from the standpoint of providing rich body. Note that the amount of a fatty acid herein refers to an amount obtained by converting it to a free fatty acid.

The constituent fatty acids of the fat or oil (A) other than eicosapentaenoic acid and docosahexaenoic acid are not particularly limited, and may be any of saturated fatty acids and unsaturated fatty acids. The ratio of the unsaturated fatty acids is preferably from 60 to 100%, more preferably from 70 to 100%, more preferably from 75 to 100%, even more preferably from 80 to 98%, from the standpoints of the appearance and industrial productivity of the fat or oil. The carbon numbers of the unsaturated fatty acids are preferably from 14 to 24, more preferably from 16 to 22, from the standpoint of physiological effects.

In the constituent fatty acids of the fat or oil (A), the mass ratio of oleic acid (C18:1) to the total content of eicosapentaenoic acid (C20:5) and docosahexaenoic acid (C22:6), [(C18:1)/(C20:5+C22:6)], is preferably 3 or more, more preferably 5 or more, more preferably 7 or more, even more preferably 9 or more, from the standpoint of improving the texture of food.

Further, the content of linoleic acid (C18:2) in the constituent fatty acids of the fat or oil (A) is preferably 80% or less, more preferably 60% or less, more preferably 45% or less, even more preferably 30% or less, from the standpoint of improving the oxidative stability.

Further, the content of α-linolenic acid (C18:3) in the constituent fatty acids of the fat or oil (A) is preferably 40% or less, more preferably 30% or less, more preferably 20% or less, even more preferably 10% or less, from the standpoint of improving the oxidative stability.

In addition, the content of the saturated fatty acids in the constituent fatty acids of the fat or oil (A) is preferably 40% or less, more preferably from 0 to 30%, more preferably from 0 to 25%, even more preferably from 2 to 20%, from the standpoints of the appearance, the physiological effects, and the industrial productivity of the fat or oil. The carbon numbers of the saturated fatty acids are preferably from 14 to 24, more preferably from 16 to 22.

Further, the total content of saturated fatty acids having 6 to 12 carbon atoms in the constituent fatty acids of the fat or oil (A) is preferably less than 40%, more preferably less than 30%, even more preferably less than 20%, from the standpoint of suppressing smoke generation at the time of cooking.

The fat or oil (A) in the present invention contains any one or more of a monoacylglycerol, a diacylglycerol, and a triacylglycerol.

The content of the triacylglycerol in the fat or oil (A) is preferably 78% or more, more preferably 88% or more, more preferably 90% or more, even more preferably 92% or more, and is preferably 100% or less, more preferably 99.5% or less, even more preferably 99% or less. Specifically, the content is preferably from 78 to 100%, more preferably from 88 to 100%, more preferably from 90 to 99.5%, even more preferably from 92 to 99%, from the standpoint of the industrial productivity of the fat or oil.

Also, the content of the diacylglycerol is preferably 19% or less, more preferably 9% or less, more preferably 7% or less, even more preferably 5% or less, and is preferably 0.1% or more, more preferably 0.2% or more. Specifically, the content is preferably from 0.1 to 7%, more preferably from 0.2 to 5%, from the standpoint of the industrial productivity of the fat or oil. Moreover, the content of the monoacylglycerol is preferably 3% or less, more preferably from 0 to 2%, from the standpoint of improving the taste and flavor.

In addition, the content of a free fatty acid or a salt thereof contained in the fat or oil (A) is preferably 5% or less, more preferably from 0 to 2%, even more preferably from 0 to 1%, from the standpoints of the taste and flavor and the industrial productivity of the fat or oil.

An edible fat or oil that may be used as an origin of the fat or oil (A) according to the present invention is not the fat or oil (A) according to the present invention is not particularly limited, and examples thereof may include the following fats or oils: plant-derived fats or oils such as soybean oil, rapeseed oil, safflower oil, rice oil, corn oil, palm oil, sunflower oil, cotton seed oil, olive oil, sesame oil, peanut oil, Job's tears seed oil, wheat germ oil, Japanese basil oil, linseed oil, perilla oil, sacha inchi oil, walnut oil, kiwi seed oil, salvia seed oil, grape seed oil, macadamia nut oil, hazelnut oil, pumpkin seed oil, camellia oil, tea seed oil, borage oil, palm olein, palm stearin, coconut oil, palm kernel oil, cacao fat, sal fat, shea fat, and algae oil; animal-derived fats or oils such as fish oil, lard, beef tallow, and butter fat; or transesterified oils, hydrogenated oils, and fractionated oils thereof. The oils may each be used singly or may be mixed appropriately before use. Of those, from the standpoint of usability, a liquid fat or oil excellent in low-temperature resistance is preferably used, and fish oil containing large amounts of eicosapentaenoic acid and docosahexaenoic acid is more preferably used. Note that the liquid fat or oil means a fat or oil that is in a liquid state at 20°C, when determined in accordance with a cold test described in Standard Methods for Analysis of Fats and Oils 2.3.8-27. In addition, the edible fat or oil is preferably a refined fat or oil obtained by a refinement step.

The term "triterpene alcohol" as used herein refers to a tetracyclic triterpene alcohol having 30 or 31 carbon atoms.

The triterpene alcohol can be obtained by, for example, extraction from rice, rice bran, a fat or oil containing the triterpene alcohol such as rice oil, or a fat or oil-processed product, or by hydrolysis of γ-oryzanol. Further, a commercially available product may be used.

The term "γ-oryzanol" as used herein is a collective term for a ferulic acid (3-methoxy-4-hydroxycinnamic acid) ester of a sterol, and the γ-oryzanol is a substance present in rice oil, corn oil, or another cereal bran oil. Here, examples of the sterol include the triterpene alcohol and phytosterols except the triterpene alcohol, such as α-sitosterol, β-sitosterol, stigmasterol, campesterol, α-sitostanol, β-sitostanol, stigmastanol, campestanol, brassicasterol, fucosterol, isofucosterol, spinasterol, and avenasterol. The γ-oryzanol can be measured in accordance with the method described in J. Food Science, 65(8), 1395 (2000) or Lipids, 30(3), 269 (1995).

The triterpene alcohols are classified into the free type triterpene alcohol (B) to be used in the present invention, a fatty acid ester type triterpene alcohol, and a ferulic acid ester type triterpene alcohol.

The term "free type triterpene alcohol" refers to a triterpene alcohol having a hydroxyl group at the C-3 position of a steroid nucleus.

Examples of the free type triterpene alcohol (B) include cycloartenol, 24-methylenecycloartanol, cyclobranol, cycloartanol, cyclosadol, cyclolaudenol, butyrospermol, and parkeol. The free type triterpene alcohol may be used as a single compound or a mixture of the compounds. Of those, one or two or more selected from cycloartenol, 24-methylenecycloartanol, and cyclobranol are preferably used, and cycloartenol, 24-methylenecycloartanol, or a combination thereof is more preferably used.

The free type triterpene alcohol can be measured in accordance with the method described in J. Am. Oil Chem. Soc., 82(6), 439 (2005).

The fat or oil composition according to the present invention contains from 0.05 to 1.8% of the free type triterpene alcohol (B). By controlling the content of the component (B) within the specified range, degradation odor smelled at the time of cooking can be suppressed and the cooked food can have good taste and flavor. That is, the free type triterpene alcohol (B) can be used for suppressing the degradation odor at the time of using, for cooking, the fat or oil whose the constituent fatty acids contain eicosapentaenoic acid and docosahexaenoic acid within the specified ranges.

The content of the free type triterpene alcohol (B) in the fat or oil composition is preferably 0.05% or more, more preferably 0.1% or more, more preferably 0.15% or more, and is preferably 1.8% or less, more preferably 1.5% or less, more preferably 1.2% or less, more preferably 1% or less, even more preferably 0.75% or less.

Specifically, the content is preferably from 0.05 to 1%, more preferably from 0.05 to 1.2%, more preferably from 0.05 to 1.2%, more preferably from 0.05 to 1%, more preferably from 0.1 to 1%, even more preferably from 0.15 to 0.75%, from the standpoints of suppressing the degradation odor at the time of cooking and improving the taste and flavor.

Further, the content of cycloartenol in the free type triterpene alcohol is preferably from 15 to 100%, more preferably from 20 to 90%, even more preferably from 25 to 80%, from the same standpoints as above.

In the fat or oil composition according to the present invention, the mass ratio between the total content, in the fat or oil composition, of eicosapentaenoic acid (C20:5) and docosahexaenoic acid (C22:6) in the constituent fatty acids of the fat or oil (A) and the content, in the fat or oil composition, of the free type triterpene alcohol (B), [(C20:5+C22:6)/(B)], is preferably 0.5 or more, more preferably 1 or more, more preferably 1.2 or more, more preferably 1.5 or more, even more preferably 1.7 or more, and is preferably 100 or less, more preferably 90 or less, more preferably 80 or less, even more preferably 40 or less. Specifically, the mass ratio [(C20:5+C22:6)/(B)] is preferably from 0.5 to 100, more preferably from 1 to 100, more preferably from 1.2 to 90, more preferably from 1.5 to 90, more preferably from 1.5 to 80, even more preferably from 1.7 to 40, from the standpoints of suppressing the degradation odor at the time of cooking and suppressing the oily feeling.

The term "fatty acid ester type triterpene alcohol" refers to a triterpene alcohol in which a fatty acid is to the hydroxyl group by an ester binding at the C-3 position thereof.

In the fat or oil composition according to the present invention, the content of the fatty acid ester type triterpene alcohol is preferably 1.4% or less, more preferably 0.5% or less, even more preferably 0.4% or less, and is preferably 0.01% or more, more preferably 0.1% or more, even more preferably 0.2% or more. Specifically, the content is preferably from 0.01 to 1.4%, more preferably from 0.01 to 0.5%, more preferably from 0.1 to 0.5%, evenmore preferably from 0.2 to 0.4%, from the standpoint of improving the texture of food and the taste and flavor of a cooked food. Any fatty acid can be used without particular limitation as long as it forms an ester with the free type triterpene alcohol, and there are given linear or branched and saturated or unsaturated fatty acids as examples thereof.

The fatty acid ester type triterpene alcohol can be measured in accordance with the method described in J. Food Science, 65(8), 1395 (2000).

Further, the amount of the fatty acid ester type triterpene alcohol can be calculated on the basis of the amount of the total triterpene alcohols, the amount of the free type triterpene alcohol, and the amount of the ferulic acid ester type triterpene alcohol. Note that the amount of the total triterpene alcohols can be measured in accordance with the method described in J. Am. Oil Chem. Soc., 82(6), 439 (2005).

The term "ferulic acid ester type triterpene alcohol" refers to a triterpene alcohol in which ferulic acid is bonded to the hydroxyl group by an ester binding at the C-3 position thereof.

In the fat or oil composition according to the present invention, the content of the ferulic acid ester type triterpene alcohol is preferably 0.7% or less, more preferably 0.5% or less, more preferably 0.15% or less, more preferably 0.1% or less, even more preferably 0.05% or less, and is preferably 0% or more, more preferably 0.0002% or more, even more preferably 0.001% or more. Specifically, the content is preferably from 0 to 0.5%, more preferably from 0.0002 to 0.15%, more preferably from 0.0002 to 0.1%, more preferably from 0.001 to 0.1%, even more preferably from 0.001 to 0.05%, from the standpoints of improving the taste and flavor and suppressing the oily feeling.

The ferulic acid ester type triterpene alcohol can be measured in accordance with the method described in J. Food Science, 65(8), 1395 (2000) or Lipids, 30(3), 269 (1995).

In addition, the content of an antioxidant in the fat or oil composition according to the present invention is preferably from 0.01 to 2%, more preferably from 0.01 to 1%, even more preferably from 0.01 to 0.5%, from the standpoint of oxidative stability at the time of each of preservation and cooking. The antioxidant comprises preferably one or two or more selected from, for example, a natural antioxidant, tocopherol, ascorbyl palmitate, ascorbyl stearate, dibutylhydroxytoluene (BHT), and butylated hydroxyanisole (BHA), more preferably, for example, one or two or more selected from a natural antioxidant, tocopherol, and ascorbyl palmitate. Of those, ascorbyl palmitate and tocopherol are preferably used in combination.

The fat or oil composition according to the present invention can be obtained by, for example, adding the component (B) and other components, if necessary, to the fat or oil (A) and optionally, for example, heating and stirring the mixture. Such fat or oil composition is used in the same manner as a general edible fat or oil, and can be applied to a variety of foods and beverages including the fat or oil. In particular, the fat or oil composition is used suitably as a fat or oil for cooking, more suitably as a fat or oil for cooking of a deep-fried food such as fry or tempura, a sauteed food, or a grilled food.

The present invention discloses a fat or oil composition according to any one of the appended claims 1-13 and its use as an edible fat or oil according to the appended claim 14.

### Examples

### (Analysis methods)

### (i) Composition of glycerides in fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was allowed to stand still, and then the upper layer was analyzed by gas-liquid chromatography (GLC).

### <GLC analysis conditions>

### (Conditions)

Apparatus: Agilent 6890 Series (manufactured by Agilent Technologies)
Integrator: ChemStation B.02.01 SR2 (manufactured by Agilent Technologies)
Column: DB-1ht (manufactured by Agilent J&W)
Carrier gas: 1.0 mL He/min
Injector: Split (1:50), T=340°C
Detector: FID, T=350°C
Oven temperature: The temperature was raised from 80°C at 10°C/min to 340°C, and kept for 15 minutes.

### (ii) Composition of constituent fatty acids in fat or oil

Fatty acid methyl esters were prepared in accordance with "Preparation method for fatty acid methyl ester (2.4.1.-1996)" described in "Standard Method for the Analysis of Fats, Oils and Related Materials" edited by Japan Oil Chemists' Society, and the resultant fat or oil samples were subjected to measurement in accordance with American Oil Chemists. Society Official Method Ce 1f-96 (GLC method).

### <GLC analysis conditions>

Column: CP-SIL88 100 m×0.25 mm×0.2 µm (VARIAN)
Carrier gas: 1.0 mL He/min
Injector: Split (1:200), T=250°C
Detector: FID, T=250°C
Oven temperature: The temperature was kept at 174°C for 50 minutes, raised to 220°C at 5°C/min, and kept for 25 minutes.

### (iii) Free type triterpene alcohol and free type phytosterol

Samples were prepared in accordance with J. Am. Oil Chem. Soc. , 82(6), 439 (2005) and were subjected to measurement by GLC. Specifically, the measurement was performed by the following method.

About 500 mg of a fat or oil sample were dissolved in about 5 mL of hexane, and the solution was charged into an SPE cartridge (Sep-Pak Silica, 5 g, GL Sciences Inc.). Washing was performed with about 40 mL of hexane/ether (95/5 in volume ratio), followed by elution with about 40 mL of ethanol/ether/hexane (50/25/25 in volume ratio), and an ethanol/ether/hexane-eluted fraction was separated. The solvent was distilled off from the fraction obtained, and the residue was charged into PTLC (Si 60, 20×20×0.1 cm, Merck KGaA). Development was performed with hexane/ether/acetic acid (90/10/2 in volume ratio) and chloroform/ether (95/5 in volume ratio) in the stated order, and then a free type triterpene alcohol fraction and a free type phytosterol fraction were separated. 0.5 mL of a trimethylsilylating agent ("Silylating agent TH," manufactured by Kanto Chemical Co., Inc.) was added to the free type triterpene alcohol fraction or free type phytosterol fraction separated in a container. The container was sealed and heated at 70°C for 30 minutes. 1.0 mL of water and 1.5 mL of hexane were added thereto, followed by shaking. The container was allowed to stand still, and then the upper layer was analyzed by gas-liquid chromatography (GLC), thereby measuring the amount of the free type triterpene alcohol and the amount of the free type phytosterol (mass%).

### <GLC analysis conditions>

Column: DB-1ht 10.0 m×0.25 mm×0.10 µm (Agilent)
Carrier gas: 1.0 mL He/min
Injector: Split (1:80), T=340°C
Detector: FID, T=350°C
Oven temperature: The temperature was raised from 200°C to 340°C at 10°C/min, and kept for 10 minutes.

### (iv) Total triterpene alcohols

Samples were prepared in accordance with J. Am. Oil Chem. Soc. , 82(6), 439 (2005) and were subjected to measurement by GLC. Specifically, the measurement was performed by the following method.

About 5 g of a fat or oil sample and about 20 mL of a 2 N potassium hydroxide/ethanol solution were added into a conical flask, followed by heating at 80°C for 60 minutes. After the mixture was allowed to stand still and be cooled to room temperature, an internal standard (cholesterol), 15 mL of water, and 10 mL of hexane were added, followed by shaking. After the mixture was allowed to stand still, the upper layer was separated and was concentrated. 0.5 mL of a trimethylsilylating agent ("Silylating agent TH," manufactured by Kanto Chemical Co. , Inc.) was added to the concentrate in a container, and the container was sealed and heated at 70°C for 30 minutes. 1.0 mL of water and 1.5 mL of hexane were added thereto, followed by shaking. The container was allowed to stand still, and then the upper layer was analyzed by gas-liquid chromatography (GLC), thereby measuring the amount of the total triterpene alcohols (mass%). The same GLC analysis conditions as those in (iii) were used.

### (v) γ-Oryzanol

Samples were prepared in accordance with Lipids, 30(3), 269 (1995), and the resultant samples were subjected to measurement by HPLC-UV. Specifically, the measurement was performed by the following method.

About 100 mg of a fat or oil sample was dissolved in ethyl acetate to obtain a solution (10 mL), and the solution was analyzed by an HPLC method.

### <HPLC analysis conditions>

Column: Inertsil ODS-3, 4.6 mm×250 mm, 5 µm (GL Sciences Inc.) Column temperature: 40°C
Flow rate: 1.2 mL/min
Detection: UV 325 nm
Eluent: acetonitrile/butanol/acetic acid (volume ratio: 82/3/2)

### (vi) Fatty acid ester type triterpene alcohol

The amount of the free type triterpene alcohol and the amount of γ-oryzanol which was converted to the free type were subtracted from the amount of the total triterpene alcohols, thereby calculating the amount of a fatty acid ester type triterpene alcohol which was converted to the free type. Conversion from the free type to the fatty acid ester type was performed, yielding the amount (mass%) of a fatty acid ester type triterpene alcohol. Note that, when the conversion from the free type to the fatty acid ester type was performed, calculation was made on the assumption that the linked fatty acid was oleic acid.

### (Raw material fat or oil)

There were used, as Fats or Oils A to C, fats or oils having each composition shown in Table 1 (Fat or Oil A: DD oil type 3 (Nippon Suisan Kaisha, Ltd.), Fat or Oil B: rapeseed salad oil (Nisshin OilliO Group, Ltd.), Fat or Oil C: soy bean salad oil (Nisshin OilliO Group, Ltd.)).

Note that the contents of the free type and fatty acid ester type triterpene alcohols and the content of γ-oryzanol were 0% in each of Raw Material Fats or Oils A to C.

### (Free type triterpene alcohol)

There was used, as the free type triterpene alcohol, a commercially available triterpene alcohol formulation ("ORYZA TRITERPENOID P" manufactured by Oryza Oil & Fat Chemical Co., Ltd. and containing a triterpene alcohol at 59%) and a preparation obtained by hydrolyzing a commercially available oryzanol (Wako Pure Chemical Industries, Ltd.) and purifying the reaction product by silica-gel column chromatography. The composition of the commercially available triterpene alcohol formulation was as follows: campesterol: 21%, β-sitosterol: 15%, stigmasterol: 3%, cycloartenol:22%, 24-methylenecycloartanol:37%. The composition of the preparation obtained from the commercially available oryzanol was as follows: cycloartenol: 40%, 24-methylenecycloartanol: 60%.

### (Free type phytosterol)

A commercially available phytosterol formulation (ADM) was used as the free type phytosterol (4-desmethylsterol). The composition of this formulation was as follows: brassicasterol: 5%, campesterol: 25%, β-sitosterol: 46%, stigmasterol: 21%.

**[Table 1]**

| | Composition of fatty acids (mass%) | | | | | | | | | | | | | Composition of glycerides (mass%) | | |
|---|---|---|---|---|---|---|---|---|---|---|---|---|---|---|---|---|
| | C12 or less | C14:0 | C16:0 | C18:0 | C18:1 | C18:2 | C18:3 | C20:0 | C20:1 | C20:5 | C22:0 | C22:1 | C22:6 | MAG | DAG | TAG |
| Fat or Oil A | 0.0 | 2.9 | 18.8 | 5.4 | 20.2 | 1.6 | 1.0 | 0.0 | 2.1 | 7.3 | 0.0 | 0.0 | 28.3 | 0.3 | 1.3 | 98.4 |
| Fat or Oil B | 0.0 | 0.0 | 4.1 | 2.0 | 62.4 | 20.4 | 8.4 | 0.6 | 1.3 | 0.0 | 0.4 | 0.1 | 0.0 | 0.0 | 1.5 | 98.5 |
| Fat or Oil C | 0.0 | 0.0 | 10.1 | 4.1 | 24.5 | 52.3 | 6.9 | 0.3 | 0.3 | 0.0 | 0.4 | 0.0 | 0.0 | 0.0 | 2.4 | 97.6 |

| | | | | | | | | | | | | | | | | |
|---|---|---|---|---|---|---|---|---|---|---|---|---|---|---|---|---|
| MAG: Monoacylglycerol DAG: Diacylglycerol TAG: Triacylglycerol | | | | | | | | | | | | | | | | |

### Examples 1 to 26 and Comparative Examples 1 to 8

### (Preparation of fat or oil composition)

Fats or Oils A to C were mixed and were additionally blended with the commercially available triterpene alcohol formulation as the free type triterpene alcohol. Each mixture was mixed and dissolved by using a stirrer while its temperature was kept at 50°C until the mixture turned entirely clear, thereby preparing each fat or oil composition. Table 2 shows the content of oleic acid (C18:1), the content of linoleic acid (C18:2), the content of α-linolenic acid (C18:3), and the total content of eicosapentaenoic acid (C20:5) and docosahexaenoic acid (C22:6) in the constituent fatty acids of the fat or oil in each fat or oil composition, and the content of the free type triterpene alcohol in each fat or oil composition.

### Example 27 and Comparative Example 9

### (Preparation of fat or oil composition)

Fats or Oils A and B were mixed and were additionally blended with the preparation obtained from oryzanol as the free type triterpene alcohol, or with the commercially available phytosterol formulation. Each mixture was mixed and dissolved by using a stirrer while its temperature was kept at 50°C until the mixture turned entirely clear, thereby preparing each fat or oil composition. Table 3 shows the content of oleic acid (C18:1), the content of linoleic acid (C18:2), the content of α-linolenic acid (C18:3), and the total content of eicosapentaenoic acid (C20:5) and docosahexaenoic acid (C22:6) in the constituent fatty acids of the fat or oil in each fat or oil composition, and the contents of the free type triterpene alcohol and the free type phytosterol in each fat or oil composition.

### (Tempura cooking)

Tempura was cooked with each of the fat or oil compositions by the following method.
Oil amount: 600 g (wok)
Oil temperature: 180°C, heating with a gas stove burner (medium heat)

**Materials to be fried:**

| | |
|---|---|
| Prawn (black tiger prawns) | 8 prawns |
| Lotus root (slices) | 8 slices |
| Pumpkin (slices) | 8 slices |
| Bell peppers (each cut into halves) | 8 peppers |
| Shishito peppers (whole) | 8 peppers |
| f. viridis (Makino) Makino (whole) | 8 pieces |
| Eggplants (each cut into halves) | 8 eggplants |

**Batter:**

| | |
|---|---|
| Flour | 100 g |
| Egg | 50 g |
| Water | 150 g |

(Evaluation of taste and flavor)

Nine panelists evaluated odor smelled at the time of tempura cooking and the taste and flavor of tempura in accordance with the following evaluation criteria, and an average value of scores was calculated as a score of the tempura. Tables 2 and 3 show the results.

### (Rich body)

4: Tempura has rich body.
3: Tempura slightly has rich body.
2: Tempura slightly lacks rich body.
1: Tempura lacks rich body.

### (Oily feeling)

4: Oily feeling is not sensed and Tempura is light.
3: Oily feeling is barely sensed but Tempura is light.
2: Oily feeling is slightly sensed and Tempura is slightly heavy.
1. Oily feeling is sensed and Tempura is heavy.

### (Crispiness)

4: Batter is moderately hard, is not sticky, and is crisp.
3: Batter is moderately hard and is not sticky.
2: Batter is slightly hard and barely sticky.
1: Batter is hard and sticky.

### (Degradation odor at the time of cooking)

4: No degradation odor is sensed.
3: Degradation odor is hardly sensed.
2: Degradation odor is slightly sensed.
1: Strong degradation odor is sensed.

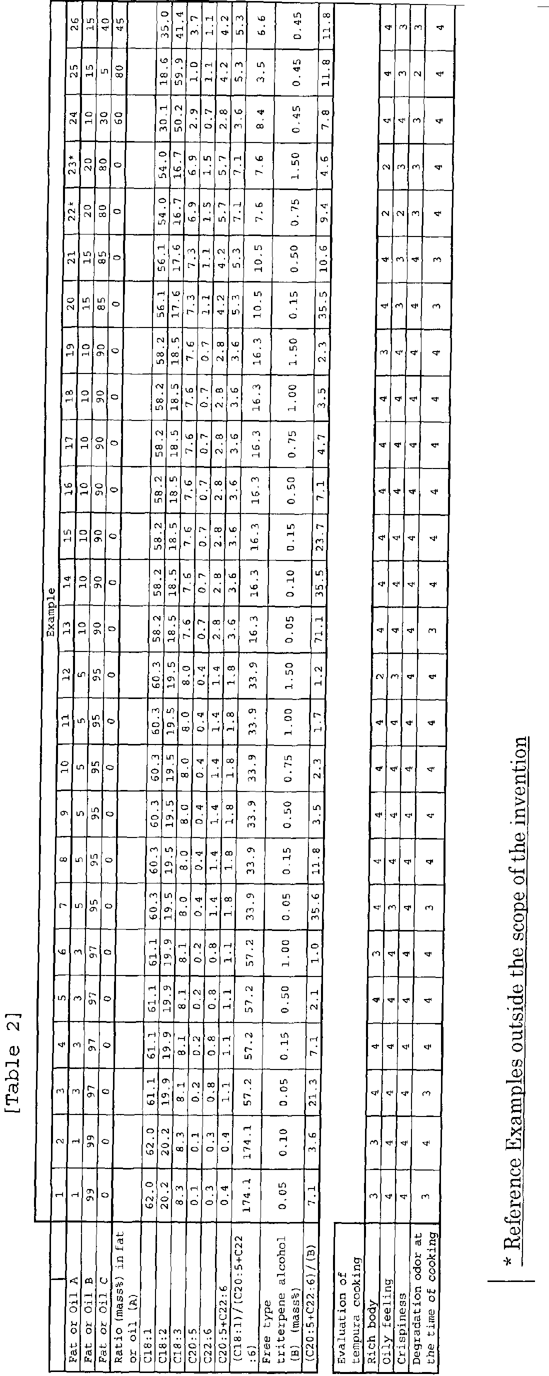

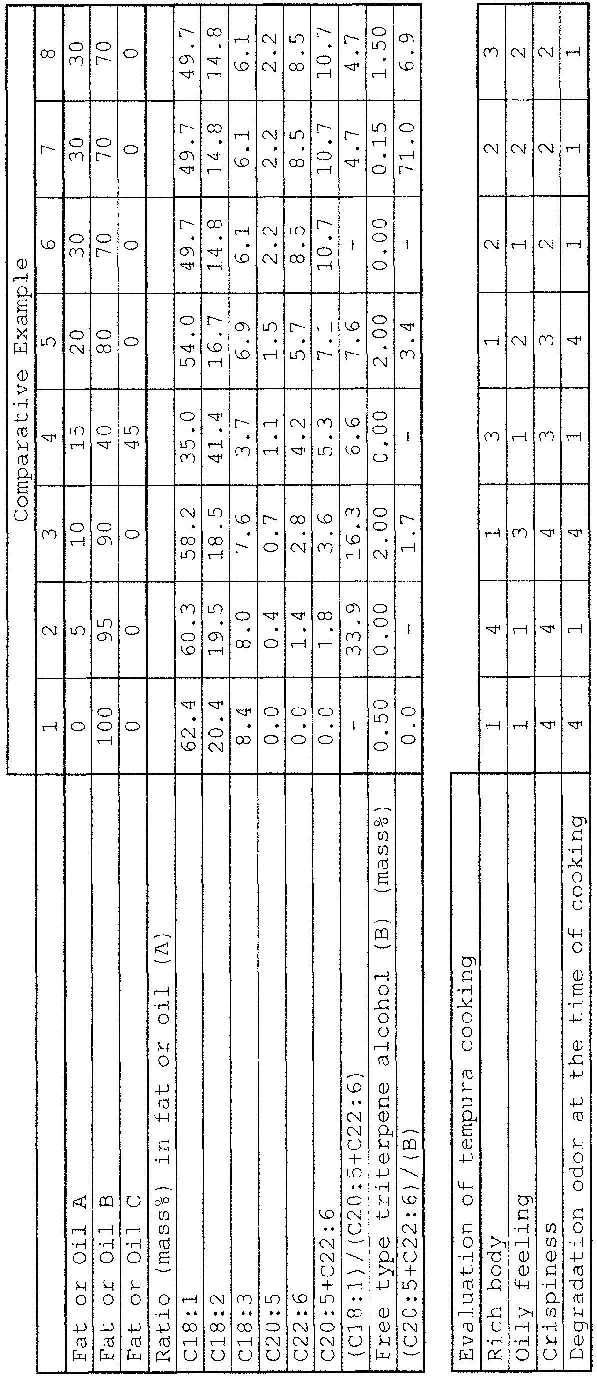

**[Table 3]**

| | Example | Comparative Example |
|---|---|---|
| | 27 | 9 |
| Fat or Oil A | 10 | 10 |
| Fat or Oil B | 90 | 90 |
| Ratio (mass%) in fat or oil (A) | | |
| C18:1 | 58.2 | 58.2 |
| C18:2 | 18.5 | 18.5 |
| C18:3 | 7.6 | 7.6 |
| C20:5 | 0.7 | 0.7 |
| C22:6 | 2.8 | 2.8 |
| C20:5+C22:6 | 3.6 | 3.6 |
| (C18:1)/(C20:5+C22:6) | 16.3 | 16.3 |
| Free type triterpene alcohol (B) (mass%) | 0.15 | 0.00 |
| (C20:5+C22:6)/(B) | 23.7 | - |
| Free type phytosterol (mass%) | 0.00 | 0.15 |
| | | |
| Evaluation of tempura cooking | | |
| Rich body | 4 | 3 |
| Oily feeling | 4 | 2 |
| Crispiness | 4 | 4 |
| Degradation odor at the time of cooking | 4 | 1 |

As evident from the results shown in Table 2 and Table 3, it confirmed that degradation odor at the time of cooking was suppressed by each of the fat or oil compositions including the free type triterpene alcohol in a specific amount. Further, each deep-fried food cooked by using each of the fat or oil compositions according to the present invention did not have oily heavy taste and flavor, had rich body, and had good taste and flavor.

When a deep-fried food was cooked by using rapeseed salad oil (Comparative Example 1) in which the total content of eicosapentaenoic acid and docosahexaenoic acid in the constituent fatty acids of the fat or oil was less than 0.4%, the deep-fried food had less rich body. When a deep-fried food was cooked by using each fat or oil (Comparative Examples 2, 4, and 6) in which the content of the free type triterpene alcohol was smaller, degradation odor was not suppressed at the time of the cooking, and the deep-fried food had oily heavy taste and flavor. When a deep-fried food was cooked by using each fat or oil (Comparative Examples 3 and 5) in which the content of the free type triterpene alcohol was larger, degradation odor was suppressed at the time of the cooking, but the deep-fried food had less rich body and hence was not preferred. Further, when a deep-fried food was cooked by using each fat or oil (Comparative Examples 7 and 8) in which the total content of eicosapentaenoic acid and docosahexaenoic acid in the constituent fatty acids of the fat or oil was more than 10%, degradation odor was not able to be sufficiently suppressed at the time of the cooking even though the free type triterpene alcohol was blended therein.

## Claims

1. A fat or oil composition, comprising the following components (A) and (B):
(A) 95 to 99.95 mass% of a fat or oil in which a total content of eicosapentaenoic acid and docosahexaenoic acid in constituent fatty acids thereof is from 0.4 to 7 mass% with respect to total constituent fatty acids of the fat or oil; and
(B) 0.05 to 1.8 mass% of a free type triterpene alcohol.

2. The fat or oil composition according to claim 1, wherein the total content of eicosapentaenoic acid and docosahexaenoic acid in the constituent fatty acids of the fat or oil as the component (A) with respect to the total constituent fatty acids of the fat or oil is from 0.5 to 5 mass%.

3. The fat or oil composition according to claim 1 or 2, wherein a content of the free type triterpene alcohol as the component (B) is from 0.05 to 1.2 mass%.

4. The fat or oil composition according to claim 1 or 2, wherein a content of the free type triterpene alcohol as the component (B) is from 0.1 to 1 mass%.

5. The fat or oil composition according to any one of claims 1 to 4, wherein the fat or oil as the component (A) comprises from 78 to 100 mass% of a triacylglycerol.

6. The fat or oil composition according to anyone of claims 1 to 5, comprising from 97 to 99 mass% of the fat or oil as the component (A).

7. The fat or oil composition according to any one of claims 1 to 6, wherein a mass ratio between a total content, in the fat or oil composition, of eicosapentaenoic acid (C20:5) and docosahexaenoic acid (C22:6) in the constituent fatty acids of the fat or oil as the component (A) and a content, in the fat or oil composition, of the free type triterpene alcohol as the component (B), [(C20:5+C22:6)/(B)], is from 0.5 to 100.

8. The fat or oil composition according to any one of claims 1 to 6, wherein a mass ratio between a total content, in the fat or oil composition, of eicosapentaenoic acid (C20:5) and docosahexaenoic acid (C22:6) in the constituent fatty acids of the fat or oil as the component (A) and a content, in the fat or oil composition, of the free type triterpene alcohol as the component (B), [(C20:5+C22:6)/(B)], is from 1.2 to 90.

9. The fat or oil composition according to any one of claims 1 to 6, wherein a mass ratio between a total content, in the fat or oil composition, of eicosapentaenoic acid (C20:5) and docosahexaenoic acid (C22:6) in the constituent fatty acids of the fat or oil as the component (A) and a content, in the fat or oil composition, of the free type triterpene alcohol as the component (B), [(C20:5+C22:6)/(B)], is from 1.5 to 80.

10. The fat or oil composition according to any one of claims 1 to 9, wherein the free type triterpene alcohol as the component (B) comprises one or two or more selected from cycloartenol, 24-methylenecycloartanol, and cyclobranol.

11. The fat or oil composition according to any one of claims 1 to 10, wherein a content of cycloartenol in the free type triterpene alcohol as the component (B) is from 15 to 100 mass%.

12. The fat or oil composition according to any one of claims 1 to 11, further comprising 1.4 mass% or less of a fatty acid ester type triterpene alcohol in the fat or oil composition.

13. The fat or oil composition according to any one of claims 1 to 12, further comprising 0.7 mass% or less of a ferulic acid ester type triterpene alcohol in the fat or oil composition.

14. Use of the fat or oil composition according to any one of claims 1 to 13 as an edible fat or oil.

## Patentansprüche

1. Fett- oder Ölzusammensetzung, enthaltend die folgenden Komponenten (A) und (B):
(A) 95 bis 99,95 Massen-% eines Fett oder Öls, worin ein Gesamtgehalt von Eicosapentaensäure und Docosahexaensäure in den Bestandteilsfettsäuren davon von 0,4 bis 7 Massen-% in Bezug auf die gesamten Bestandteilsfettsäuren des Fetts oder Öls ist und
(B) 0,05 bis 1,8 Massen-% eines Triterpenalkohols vom freien Typ.

2. Fett- oder Ölzusammensetzung nach Anspruch 1, worin der Gesamtgehalt von Eicosapentaensäure und Docosahexaensäure in den Bestandteilsfettsäuren des Fetts oder Öls als Komponente (A) in Bezug auf die gesamten Bestandteilsfettsäuren des Fetts oder Öls von 0,5 bis 5 Massen-% ist.

3. Fett- oder Ölzusammensetzung nach Anspruch 1 oder 2, worin ein Gehalt an Triterpenalkohol vom freien Typ als Komponente (B) von 0,05 bis 1,2 Massen-% ist.

4. Fett- oder Ölzusammensetzung nach Anspruch 1 oder 2, worin ein Gehalt an Triterpenalkohol vom freien Typ als Komponente (B) von 0,1 bis 1 Massen-% ist.

5. Fett- oder Ölzusammensetzung nach einem der Ansprüche 1 bis 4, worin das Fett oder Öl als Komponente (A) von 78 bis 100 Massen-% eines Triacylglycerins enthält.

6. Fett- oder Ölzusammensetzung nach einem der Ansprüche 1 bis 5, enthaltend von 97 bis 99 Massen-% des Fetts oder Öls als Komponente (A).

7. Fett- oder Ölzusammensetzung nach einem der Ansprüche 1 bis 6, worin ein Massenverhältnis zwischen einem Gesamtgehalt von Eicosapentaensäure (C20:5) und Docosahexaensäure (C22:6) in den Bestandteilsfettsäuren des Fetts oder Öls in der Fett- oder Ölzusammensetzung als Komponente (A) und einem Gehalt von Triterpenalkohol vom freien Typ als Komponente (B) in der Fett- oder Ölzusammensetzung, [(C20:5+C22:6)/(B)], von 0,5 bis 100 ist.

8. Fett- oder Ölzusammensetzung nach einem der Ansprüche 1 bis 6, worin ein Massenverhältnis zwischen einem Gesamtgehalt von Eicosapentaensäure (C20:5) und Docosahexaensäure (C22:6) in den Bestandteilsfettsäuren des Fetts oder Öls in der Fett- oder Ölzusammensetzung als Komponente (A) und einem Gehalt von Triterpenalkohol vom freien Typ als Komponente (B) in der Fett- oder Ölzusammensetzung, [(C20:5+C22:6)/(B)], von 1,2 bis 90 ist.

9. Fett- oder Ölzusammensetzung nach einem der Ansprüche 1 bis 6, worin ein Massenverhältnis zwischen einem Gesamtgehalt von Eicosapentaensäure (C20:5) und Docosahexaensäure (C22:6) in den Bestandteilsfettsäuren des Fetts oder Öls in der Fett- oder Ölzusammensetzung als Komponente (A) und einem Gehalt von Triterpenalkohol vom freien Typ als Komponente (B) in der Fett- oder Ölzusammensetzung, [(C20:5+C22:6)/(B)], von 1,5 bis 80 ist.

10. Fett- oder Ölzusammensetzung nach einem der Ansprüche 1 bis 9, worin der Triterpenalkohol vom freien Typ als Komponente (B) ein oder zwei oder mehrere enthält, ausgewählt aus Cycloartenol, 24-Methylencycloartanol und Cyclobranol.

11. Fett- oder Ölzusammensetzung nach einem der Ansprüche 1 bis 10, worin ein Gehalt von Cycloartenol in dem Triterpenalkohol vom freien Typ als Komponente (B) von 15 bis 100 Massen-% ist.

12. Fett- oder Ölzusammensetzung nach einem der Ansprüche 1 bis 11, weiterhin enthaltend 1,4 Massen-% oder weniger eines Triterpenalkohols vom Fettsäureestertyp in der Fett- oder Ölzusammensetzung.

13. Fett- oder Ölzusammensetzung nach einem der Ansprüche 1 bis 12, weiterhin enthaltend 0,7 Massen-% oder weniger eines Triterpenalkohols vom Ferulasäureester-Typ in der Fett- oder Ölzusammensetzung.

14. Verwendung der Fett- oder Ölzusammensetzung nach einem der Ansprüche 1 bis 13 als essbares Fett oder Öl.

## Revendications

1. Composition de graisse ou d'huile, comprenant les composants (A) et (B) suivants :
(A) 95 à 99,95 % en masse d'une graisse ou d'une huile dans laquelle une teneur totale en acide eicosapentaénoïque et en acide docosahexaénoïque dans des acides gras constitutifs de celle-ci est de 0,4 à 7 % en masse par rapport aux acides gras totaux constitutifs de la graisse ou de l'huile ; et
(B) 0,05 à 1,8 % en masse d'un alcool triterpénique de type libre.

2. Composition de graisse ou d'huile selon la revendication 1, dans laquelle la teneur totale en acide eicosapentaénoïque et en acide docosahexaénoïque dans les acides gras constitutifs de la graisse ou de l'huile en tant que composant (A) par rapport aux acides gras totaux constitutifs de la graisse ou huile est de 0,5 à 5 % en masse.

3. Composition de graisse ou d'huile selon la revendication 1 ou 2, dans laquelle une teneur en alcool triterpénique de type libre en tant que composant (B) est de 0,05 à 1,2 % en masse.

4. Composition de graisse ou d'huile selon la revendication 1 ou 2, dans laquelle une teneur en alcool triterpénique de type libre en tant que composant (B) est de 0,1 à 1 % en masse.

5. Composition de graisse ou d'huile selon l'une quelconque des revendications 1 à 4, dans laquelle la graisse ou l'huile en tant que composant (A) comprend de 78 à 100 % en masse d'un triacylglycérol.

6. Composition de graisse ou d'huile selon l'une quelconque des revendications 1 à 5, comprenant de 97 à 99 % en masse de la graisse ou de l'huile en tant que composant (A).

7. Composition de graisse ou d'huile selon l'une quelconque des revendications 1 à 6, dans laquelle un rapport massique entre une teneur totale, dans la composition de graisse ou d'huile, de l'acide eicosapentaénoïque (C20:5) et de l'acide docosahexaénoïque (C22:6) dans les acides gras constitutifs de la graisse ou de l'huile en tant que composant (A), et une teneur, dans la composition de graisse ou d'huile, de l'alcool triterpénique de type libre en tant que composant (B), [(C20:5+C22:6) / (B)], est de 0,5 à 100.

8. Composition de graisse ou d'huile selon l'une quelconque des revendications 1 à 6, dans laquelle un rapport massique entre une teneur totale de l'acide eicosapentaénoïque (C20:5) et de l'acide docosahexaénoïque (C22:6) dans les acides gras constitutifs de la graisse ou de l'huile en tant que composant (A), et une teneur, dans la composition de graisse ou d'huile, de l'alcool triterpénique de type libre comme composant (B), [(C20:5+C22:6) / (B)], est de 1,2 à 90.

9. Composition de graisse ou d'huile selon l'une quelconque des revendications 1 à 6, dans laquelle un rapport massique entre une teneur totale, dans la composition de graisse ou d'huile, de l'acide eicosapentaénoïque (C20:5) et de l'acide docosahexaénoïque (C22:6) dans les acides gras constitutifs de la graisse ou de l'huile en tant que composant (A), et une teneur, dans la composition de graisse ou d'huile, de l'alcool triterpénique de type libre en tant que composant (B), [(C20:5+C22:6) / (B)], est de 1,5 à 80.

10. Composition de graisse ou d'huile selon l'une quelconque des revendications 1 à 9, dans laquelle l'alcool triterpénique de type libre en tant que composant (B) comprend un ou deux ou plus de deux composés choisis parmi le cycloarténol, le 24-méthylènecycloartanol et le cyclobranol.

11. Composition de graisse ou d'huile selon l'une quelconque des revendications 1 à 10, dans laquelle une teneur en cycloarténol dans l'alcool triterpénique de type libre en tant que composant (B) est de 15 à 100 % en masse.

12. Composition de graisse ou d'huile selon l'une quelconque des revendications 1 à 11, comprenant en outre 1,4 % en masse ou moins d'un alcool triterpénique du type ester d'acide gras dans la composition de graisse ou d'huile.

13. Composition de graisse ou d'huile selon l'une quelconque des revendications 1 à 12, comprenant en outre 0.7 % en masse ou moins d'un alcool triterpénique du type ester d'acide férulique dans la composition de graisse ou d'huile.

14. Utilisation de la composition de graisse ou d'huile selon l'une quelconque des revendications 1 à 13 en tant que graisse ou huile comestible.
